# EUROPÄISCHE PATENTSCHRIFT

(11) **EP 4 430 372 B1**
(45) Veröffentlichungstag und Bekanntmachung des Hinweises auf die Patenterteilung: **05.08.2026**
(21) Anmeldenummer: 22790527.0
(22) Anmeldetag: 27.09.2022
(51) Int. Cl.: G01L 9/00, G01K 1/00, G01L 19/06

(54) **BAUGRUPPE EINES FELDGERÄTES ZUR BESTIMMUNG ODER ÜBERWACHUNG EINER PHYSIKALISCHEN ODER CHEMISCHEN PROZESSGRÖSSE**
ASSEMBLY OF A FIELD DEVICE FOR DETERMINING OR MONITORING A PHYSICAL OR CHEMICAL PROCESS VARIABLE
ENSEMBLE DE DISPOSITIF DE TERRAIN POUR DÉTERMINATION OU SURVEILLANCE D'UNE VARIABLE DE PROCESSUS PHYSIQUE OU CHIMIQUE

(30) Priorität: 12.11.2021 DE 102021129594
(43) Veröffentlichungstag der Anmeldung: 18.09.2024
(73) Patentinhaber: Endress+Hauser SE+Co. KG, 79689 Maulburg (DE)
(72) Erfinder: LEUTHNER, Dietmar, 79576 Weil am Rhein (DE); LOPATIN, Sergey, 79540 Lörrach (DE); GETMAN, Igor, 79539 Lörrach (DE)
(74) Vertreter: Endress + Hauser Group Services (Deutschland) AG+Co. KG
(86) Internationale Anmeldenummer: PCT/EP2022/076769
(87) Internationale Veröffentlichungsnummer: WO 2023/083521

(56) Entgegenhaltungen:
- DE-A1- 102019 134 595
- JP-A- H09 113 394
- US-A- 3 422 324

## Beschreibung

Die Erfindung bezieht sich auf eine Baugruppe eines Feldgerätes zur Bestimmung oder Überwachung einer physikalischen oder chemischen Prozessgröße eines Mediums in der Automatisierungstechnik sowie eine Verwendung von Kupfer, einer Silberlegierung oder einer Kupferlegierung ausgenommen einer Nickelkupferlegierung als Mess- bzw. Trennmembran für einen Druckmittler oder eine Sensorbaugruppe.

In Automatisierungsanlagen, insbesondere in Prozessautomatisierungsanlagen, werden vielfach Feldgeräte eingesetzt, die zur Erfassung und/oder Beeinflussung von Prozessgrößen dienen. Zur Erfassung von Prozessvariablen dienen Sensoren, die beispielsweise in Füllstandsmessgeräten, Durchflussmessgeräten, Druck- und Temperaturmessgeräten, pH-Redoxpotential¬messgeräten, Leitfähigkeitsmessgeräten, usw. integriert sind, welche die entsprechenden Prozess¬größen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein Geräte verstanden, die auf der Feldebene angeordnet sind. Eine Viel¬zahl solcher Feldgeräte wird von der Firma Endress + Hauser hergestellt und vertrie¬ben.

Zum Erfassen von Drücken eines Prozessmediums werden häufig sogenannte Druckmittler eingesetzt, welche einen Gehäusekörper aufweisen, an dem eine Trennmembran, unter Bildung eines mit einer Druckübertragungsflüssigkeit gefüllten hydraulischen Kammerverbundes zwischen dem Gehäusekörper und der Trennmembran, druckdicht befestigt wird, wobei sich ein hydraulischer Pfad durch den Gehäusekörper erstreckt, um den an der Trennmembran anstehenden Druck eines Prozessmediums zu übertragen.

Die in dem hydraulischen Kammerverbund eingeschlossene Druckübertragungsflüssigkeit, die meistens ein Öl umfasst, bewirkt, dass ein Druck, welcher an der dem Prozessmedium zugewandten Seite der Trennmembran anliegt, an ein Drucksensorelement zum Erfassen eines Druckmesswertes geleitet wird. Hierbei gilt es, um einen optimalen Betrieb des Druckmittlers über eine lange Lebensdauer von einigen Jahren bis hin zu einigen Jahrzehnten, zu gewährleisten, dass sich das Volumen innerhalb des Druckmittlers nicht wesentlich verändern sollte, da sonst eine Verfälschung des zu übertragenden Druckes und somit des Druckmesswertes erfolgen würde.

Insoweit, als dass eine solche Verfälschung aufgrund von sich im Inneren bildenden oder von außen eindiffundiertem Wasserstoff, bspw. in Form von Wasserstoffmolekülen und/oder Wasserstoffatomen, hervorgerufen wird, ist es bekannt, dass Vorkehrungen getroffen werden, um eine solche Verfälschung zu vermindern.

So schlägt bspw. die DE 10 2013 110 968 A1 ein

Wasserstoffabsorptionsmaterial vor, welches in der eingeschlossenen Druckübertragungsflüssigkeit platziert wird, sodass Wasserstoffatome absorbiert werden.

Ebenfalls ist es bekannt, dass, um die Diffusion zu begrenzen, die Membran zusätzlich beschichtet wird. Für gewöhnlich handelt es sich dabei um galvanisch abgeschiedene Goldschichten oder Gold-Rhodium-Schichten. Für eine effiziente Reduzierung der Diffusion sind galvanische Schichtdicken von bis zu 40 µm (Mikrometer) notwendig. Nachteilig an dieser Variante sind jedoch die relativ hohen Kosten aufgrund einer relativ dicken Goldschicht, eine mögliche negative Veränderung der mechanischen Eigenschaften der ursprünglichen Trennmembran aufgrund der relativ dicken Goldschicht und bimetallischer Effekte bei Temperaturwechseln.

Der Erfindung liegt die Aufgabe zugrunde, hier Abhilfe zu schaffen.

Weiterhin offenbart US3422324A einen Drucksensor mit einer Membran aus einer Kupfer- oder Silberlegierung.

Die Aufgabe wird erfindungsgemäß gelöst durch die Baugruppe gemäß Patentanspruch 1.

Die erfindungsgemäße Baugruppe eines Feldgerätes zur Bestimmung oder Überwachung einer physikalischen oder chemischen Prozessgröße eines Mediums in der Automatisierungstechnik, umfasst zumindest eine erste Komponente und eine zweite Komponente, die in einem Verbindungsbereich miteinander gefügt sind, und wobei zumindest die zweite Komponente zumindest in einem Teilbereich, der im eingebauten Zustand des Feldgerätes in Kontakt mit dem Medium steht, vollständig aus einem Material ausgewählt aus der Gruppe von Kupfer, einer Silberlegierung oder einer Kupferlegierung ausgenommen einer Nickelkupferlegierung besteht.

Erfindungsgemäß wird eine Baugruppe vorgeschlagen, bei der die zweite Komponente, die bspw. eine Mess- bzw. Trennmembran sein kann, ausschließlich aus einem Material ausgewählt aus der Gruppe von Kupfer, einer Silberlegierung oder einer Kupferlegierung ausgenommen einer Nickelkupferlegierung besteht. Dies bedeutet, die zweite Komponente ist als massive Komponente ausgebildet, die aus einem der genannten Werkstoffe besteht, bspw. eine massive Mess- bzw. Trennmembran aus einem der Werkstoffe. Durch die Ausbildung der zweiten Komponente als massive Komponente aus einem der genannten Werkstoffe weist die Komponente eine hohe Resistenz gegen das Eindringen von Wasserstoff auf.

Eine vorteilhafte Ausgestaltung der erfindungsgemäßen Baugruppe sieht vor, dass die Kupferlegierung eine Kupferberyllium-, eine Kupferzinn-, oder eine Kupferzinklegierung und/oder die Silberlegierung eine Silberkupfer-, eine Silbernickel-, eine Silbermangan- oder eine Silberkupfernickellegierung umfasst.

Eine weitere vorteilhafte Ausgestaltung der erfindungsgemäßen Baugruppe sieht vor, dass die beiden Komponenten durch Löten oder Verkleben miteinander gefügt sind.

Erfindungsgemäß wird vorgesehen, dass die Baugruppe eine dritte Komponente umfasst, die aus einem anderen Material der Gruppe von Kupfer, einer Silberlegierung oder einer Kupferlegierung ausgenommen einer Nickelkupferlegierung besteht.

Erfindungsgemäß wird vorgesehen, dass die zweite Komponente, die in einem Teilbereich aus einem Material ausgewählt aus der Gruppe aus Kupfer, der Silberlegierung, oder der Kupferlegierung, ausgenommen einer Nickelkupferlegierung besteht und die dritte Komponente jeweils eine Einzelronde darstellen, die durch Walzen zu einer gemeinsamen Ronde gefügt sind.

Eine weitere vorteilhafte Ausgestaltung der erfindungsgemäßen Baugruppe sieht vor, dass es sich bei der Baugruppe um einen Druckmittler oder Sensorkörper zur Bestimmung und/oder Überwachung eines Drucks des Mediums handelt, wobei es sich bei der zweiten Komponente um eine Mess- bzw. Trennmembran handelt, die in Kontakt mit dem Medium steht und wobei es sich bei der ersten Komponente um einen Druckmittlerkörper oder Sensorkörper handelt, der aus einem metallischen Material besteht, wobei die Mess- bzw. Trennmembran und der metallische Druckmittlerkörper miteinander gefügt sind.

Eine weitere vorteilhafte Ausgestaltung der erfindungsgemäßen Baugruppe sieht vor, dass die zweite und dritte Komponente zusammen die Mess- bzw. Trennmembran bilden, die in Kontakt mit dem Medium steht.

Die Erfindung betrifft weiterhin eine Verwendung von Kupfer, einer Silberlegierung oder einer Kupferlegierung ausgenommen einer Nickelkupferlegierung als Mess- bzw. Trennmembran für einen Druckmittler oder eine Sensorbaugruppe.

Die Erfindung wird anhand der nachfolgenden Zeichnungen näher erläutert. Es zeigt:
Fig. 1: ein erstes Ausführungsbeispiel der erfindungsgemäßen Baugruppe, das nicht in den Schutzbereich der Ansprüche fällt,
Fig. 2: ein zweites Ausführungsbeispiel der erfindungsgemäßen Baugruppe, und
Fig. 3: ein drittes Ausführungsbeispiel der erfindungsgemäßen Baugruppe, das nicht in den Schutzbereich der Ansprüche fällt.

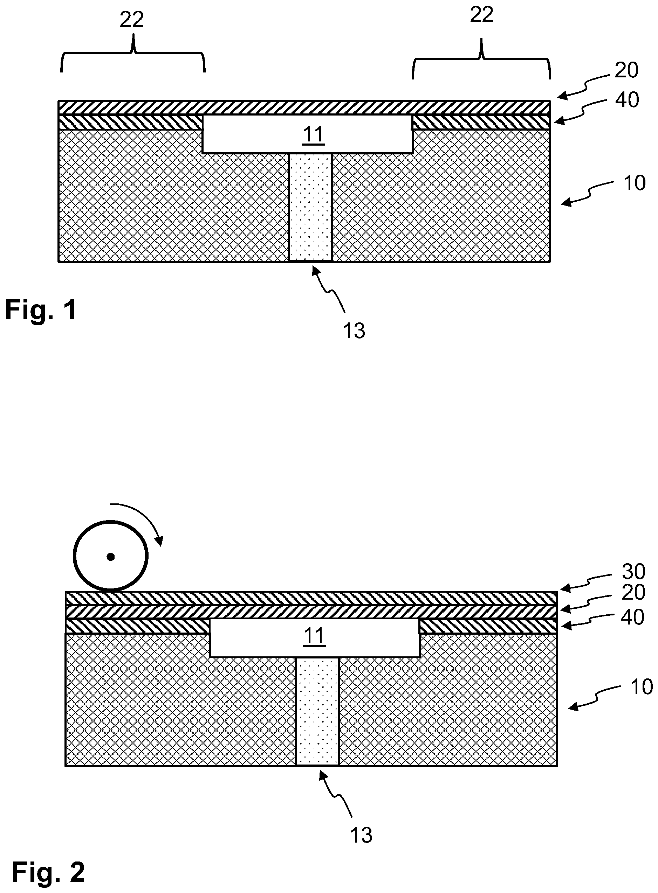

Figur 1 zeigt ein erstes Ausführungsbeispiel der erfindungsgemäßen Baugruppe eines Feldgerätes, das nicht in den Schutzbereich der Ansprüche fällt, zur Bestimmung oder Überwachung einer physikalischen oder chemischen Prozessgröße eines Mediums. Hierzu ist ein Längsschnitt durch eine erfindungsgemäße Baugruppe in Form eines Druckmittlers gezeigt. Gleichwohl kann es sich auch um eine Sensorbaugruppe handeln. Der Druckmittler umfasst einen, vorzugsweise metallischen Druckmittlerkörper als erste Komponente 10 und eine Trennmembran als zweite Komponente 20 der erfindungsgemäßen Baugruppe. Die Trennmembran 20 ist entlang eines Randbereichs 22 über einen umlaufenden Füge- bzw. Verbindungsbereich 40 mit einer Stirnfläche des Druckmittlerkörpers oder Sensorkörpers druckdicht gefügt, so dass zwischen der Stirnfläche des Druckmittlerkörpers und der Trennmembran eine Druckkammer 11 ausgebildet ist. Auf einer der Trennmembran 20 abgewandten Seite der Kammer 11 kann ferner im Druckmittlerkörper 10 ein Membranbett herauspräpariert sein, an welches sich die Trennmembran 20 im Überlastfall anlegen kann. Die Druckkammer 11 kann wiederum mit einer Übertragungsflüssigkeit gefüllt sein, so dass in dem gefügten Zustand ein Druck eines Prozessmediums, welches an der dem Druckmittlerkörper 10 abgewandten Seite der Trennmembran 20 anliegt, durch die Übertragungsflüssigkeit übertragen wird. Die Übertragung des Druckes kann beispielsweise durch eine in den Druckmittlerkörper 10 integrierten hydraulischen Pfad 13 an ein vom Druckmittler abgesetzt angeordnetes Sensorelement des Feldgerätes erfolgen. Das abgesetzt angeordnet Sensorelement ermittelt wiederum in Abhängigkeit des durch den mit der Übertragungsflüssigkeit gefüllten hydraulischen Pfad 13 übertragenen Drucks einen Druckwert. In Fig. 1 ist der hydraulische Pfad exemplarisch angedeutet. Dieser ist nur im Fall des Druckmittler notwendig und nicht im Fall der Sensorbaugruppe, die nachfolgend beschrieben wird.

Bei der Baugruppe kann es sich alternativ aber auch, wie gerade ausgeführt, um eine Sensorbaugruppe 10, 20 handeln, welche aus einem Sensorkörper 10 als erste Komponente und einer Messmembran 20 als zweite Komponente besteht. Der Sensorkörper 10 kann derartig ausgebildet sein, dass in dem gefügten Zustand, d.h. nachdem die Messmembran 20 im Randbereich 22 umlaufend mit dem Sensorkörper 10 gefügt wurde, eine Kammer 11 entsteht. Im Gegensatz zu dem zuvor beschriebenen Beispiel des Druckmittlers ist die Kammer 11 bei der Sensorbaugruppe 10, 20 allerdings nicht mit einer Druckübertragungsflüssigkeit gefüllt. Im Gegensatz zu dem zuvor beschriebenen Druckmittler kann die Sensorbaugruppe ferner direkt mit der Messmembran 20 an den Prozess angebunden sein (frontbündiger Einbau). Über die druckabhängige Auslenkung der Messmembran 20 durch das Medium kann ferner ein Druckwert bestimmt werden. Die Messmembran 20 dient in diesem Fall auch als Trennmembran, die das anzubindende Feldgerät von dem Medium trennt.

Die Membran (Trennmembran im Fall des Druckmittlers und Messmembran im Fall der Sensorbaugruppe) ist erfindungsgemäß ausschließlich aus Kupfer, einer Silberlegierung oder einer Kupferlegierung, ausgenommen einer Nickelkupferlegierung (z.B. Monel) ausgebildet. Die Membran ist somit als massive Membran aus zumindest einem der genannten Werkstoffe ausgebildet bzw. gefertigt. Als besonders vorteilhafte Werkstoffe haben sich dabei folgende Kupferlegierungen herausgestellt: eine Kupferberyllium-, eine Kupferzinn-, oder eine Kupferzinklegierung. Hinsichtlich der Silberlegierung haben sich eine Silberkupfer-, eine Silbernickel-, eine Silbermangan- oder eine Silberkupfernickellegierung als besonders vorteilhaft herausgestellt.

Der Grundkörper (Druckmittlerkörper im Fall des Druckmittlers und Sensorkörper im Fall der Sensorbaugruppe) 10 kann ebenfalls je nach Anwendung aus verschiedenen korrosionsbeständigen Werkstoffen geformt bzw. gefertigt werden. Beispielsweise kann der Grundköper 10 aus einem hochlegierten Qualitätsstahl, wie zum Beispiel ein Chrom-Nickel-Stahl, insbesondere 316L bestehen. Alternativ kann der Grundkörper aber auch aus einer Nickelbasis Legierung, wie zum Beispiel AlloyC oder einer mehrphasigen Legierung, wie zum Beispiel Duplex oder dergleichen bestehen.

Um die Membran 20 mit dem Grundkörper 10 zu fügen, kann beispielsweise ein Diffusionslöt-, ein Hartlöt-, oder ein Klebeverfahren eingesetzt werden. Figur 2 zeigt ein zweites Ausführungsbeispiel der erfindungsgemäßen Baugruppe. Hierbei ist der Aufbau der Baugruppe gleich wie zuvor beschrieben, unterschiedlich ist lediglich, dass die Baugruppe eine dritte Komponente 30 aufweist. Gemäß diesem Ausführungsbeispiel sind die zweite und dritte Komponente 20, 30 jeweils als Einzelronde ausgebildet, die durch Walzen zu einer gemeinsamen Ronde gefügt werden. Die gemeinsame Ronde bildet somit die Mess- bzw. Trennmembran. Die beiden einzelnen Ronden sind hierbei jeweils aus einem der zuvor genannten Werkstoffe ausgebildet.

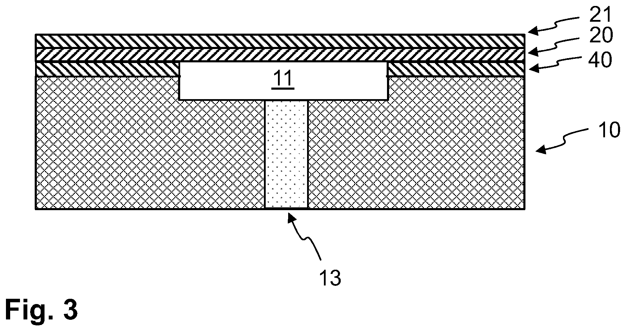

Figur 3 zeigt ein weiteres Ausführungsbeispiel**,** das nicht in den Schutzbereich der Ansprüche fällt, der erfindungsgemäßen Baugruppe, die wiederum gleich dem ersten Ausführungsbeispiel ausgebildet ist. Unterschiedlich ist lediglich, dass die Baugruppe eine dritte Komponente 21 aufweist, die in Form einer Beschichtung auf die zweite Komponente 20 aufgebracht ist. Die Beschichtung ist hierbei aus einem anderen der zuvor genannten Werkstoffe ausgebildet. Grundsätzlich muss die dritte Komponente 30 in Form der Beschichtung auch nicht vollflächig auf der zweiten Komponente 20 aufgebracht sein, sondern kann auch nur in einem Bereich, der im eingebauten Zustand des Feldgerätes in Kontakt mit dem Medium steht, vorhanden sein.

### Bezugszeichenliste

- 10: Erste Komponente der Baugruppe, insb. Druckmittler- oder Sensorkörper
- 11: Druckkammer
- 13: Hydraulischer Pfad
- 20: Zweite Komponente der Baugruppe, insb. Mess- bzw. Trennmembran
- 21: Beschichtung
- 22: Randbereich
- 30: Dritte Komponente der Baugruppe
- 40: Verbindungsbereich

## Patentansprüche

1. Baugruppe eines Feldgerätes zur Bestimmung oder Überwachung einer physikalischen oder chemischen Prozessgröße eines Mediums in der Automatisierungstechnik, wobei die Baugruppe zumindest eine erste Komponente (10) und eine zweite Komponente (20) umfasst, die in einem Verbindungsbereich (40) miteinander gefügt sind, und wobei zumindest die zweite Komponente (20) zumindest in einem Teilbereich, der im eingebauten Zustand des Feldgerätes in Kontakt mit dem Medium steht, vollständig aus einem Material ausgewählt aus der Gruppe von Kupfer, einer Silberlegierung oder einer Kupferlegierung ausgenommen einer Nickelkupferlegierung besteht, **dadurch gekennzeichnet, dass** die Baugruppe eine dritte Komponente (30) umfasst, die aus einem anderen Material der Gruppe aus Kupfer, der Silberlegierung, oder der Kupferlegierung, ausgenommen einer Nickelkupferlegierung besteht und wobei die zweite Komponente (20), die in einem Teilbereich aus einem Material ausgewählt aus der Gruppe aus Kupfer, der Silberlegierung, oder der Kupferlegierung, ausgenommen einer Nickelkupferlegierung besteht und die dritte Komponente (30) jeweils eine Einzelronde darstellen, die durch Walzen zu einer gemeinsamen Ronde gefügt sind.

2. Baugruppe nach dem vorhergehenden Anspruch, wobei die Kupferlegierung eine Kupferberyllium-, eine Kupferzinn-, oder eine Kupferzinklegierung und/oder die Silberlegierung eine Silberkupfer-, eine Silbernickel-, eine Silbermangan- oder eine Silberkupfernickellegierung umfasst.

3. Baugruppe nach einem der vorhergehenden Ansprüche, wobei die beiden Komponenten (10, 20) durch Löten oder Verkleben miteinander gefügt sind.

4. Baugruppe nach einem der vorhergehenden Ansprüche, wobei es sich bei der Baugruppe um einen Druckmittler oder eine Sensorbaugruppe zur Bestimmung und/oder Überwachung eines Drucks des Mediums handelt, wobei es sich bei der zweiten Komponente (20) um eine Mess- bzw. Trennmembran handelt, die in Kontakt mit dem Medium steht und wobei es sich bei der ersten Komponente (10) um einen Druckmittlerkörper oder Sensorkörper handelt, der aus einem metallischen Material besteht, wobei die Mess- bzw. Trennmembran (20) und der metallische Druckmittlerkörper bzw. Sensorkörper (10) miteinander gefügt sind.

## Claims

1. A field device assembly for determining or monitoring a physical or chemical process variable of a medium in automation technology, wherein the assembly comprises at least a first component (10) and a second component (20), which are joined together in a connecting area (40), and wherein at least the second component (20) is completely made of a material chosen from the group of copper, a silver alloy or a copper alloy, with the exception of cupronickel, at least in a partial area which is in contact with the medium when the field device is installed, **characterized in that** the assembly comprises a third component (30), which is made of a different material from the group of copper, the silver alloy or the copper alloy, with the exception of cupronickel, and wherein the second component (20), which is made in a partial area of a material chosen from the group of copper, the silver alloy or the copper alloy, with the exception of cupronickel, and the third component (30) are each a separate round blank which are joined together to make a joint round blank by means of rolling.

2. The assembly as claimed in the preceding claim, wherein the copper alloy comprises beryllium copper, tin bronze or brass, and/or the silver alloy comprises a silver copper, silver nickel, silver manganese or silver copper nickel alloy.

3. The assembly as claimed in one of the preceding claims, wherein the two components (10, 20) are joined together by means of soldering or adhesion.

4. The assembly as claimed in one of the preceding claims, wherein the assembly is a diaphragm seal or a sensor assembly for determining and/or monitoring a pressure of the medium, wherein the second component (20) is a measuring or separating membrane which is in contact with the medium, and wherein the first component (10) is a diaphragm seal body or sensor body which is made of a metallic material, wherein the measuring or separating membrane (20) and the metal diaphragm seal body or sensor body (10) are joined together.

## Revendications

1. Module d'un appareil de terrain destiné à la détermination ou à la surveillance d'une grandeur de process physique ou chimique d'un produit dans le domaine de l'automatisation, le module comprenant au moins un premier composant (10) et un deuxième composant (20), lesquels sont assemblés l'un à l'autre dans une zone de jonction (40), et au moins le deuxième composant (20) étant constitué, au moins dans une zone partielle qui, lorsque l'appareil de terrain est monté, est en contact avec le produit, entièrement d'un matériau choisi parmi le groupe comprenant le cuivre, un alliage d'argent ou un alliage de cuivre, à l'exception d'un alliage de cuivre-nickel,
**caractérisé en ce que** le module comprend un troisième composant (30), lequel est constitué d'un autre matériau du groupe comprenant le cuivre, l'alliage d'argent ou l'alliage de cuivre, à l'exception d'un alliage de cuivre-nickel, et le deuxième composant (20) - lequel est constitué, dans une zone partielle, d'un matériau choisi parmi le groupe comprenant le cuivre, l'alliage d'argent ou l'alliage de cuivre, à l'exception d'un alliage de nickel-cuivre - et le troisième composant (30) constituant respectivement un flan circulaire individuel, lesquels flans circulaires sont assemblés par laminage pour former un flan circulaire commun.

2. Module selon la revendication précédente, pour lequel l'alliage de cuivre comprend un alliage cuivre-béryllium, un alliage cuivre-étain ou un alliage cuivre-zinc et/ou l'alliage d'argent comprend un alliage argent-cuivre, un alliage argent-nickel, un alliage argent-manganèse ou un alliage argent-cuivre-nickel.

3. Module selon l'une des revendications précédentes, pour lequel les deux composants (10, 20) sont assemblés par soudure ou par collage.

4. Module selon l'une des revendications précédentes, le module étant un séparateur ou un module capteur destiné à la détermination et/ou à la surveillance d'une pression du produit, le deuxième composant (20) étant une membrane de mesure ou de séparation, laquelle est en contact avec le produit, et le premier composant (10) étant un corps de séparateur ou un corps de capteur, lequel corps est constitué d'un matériau métallique, la membrane de mesure ou de séparation (20) et le corps de séparateur ou le corps de capteur (10) métallique étant assemblés l'un à l'autre.
